# EUROPÄISCHE PATENTSCHRIFT

(11) **EP 0 514 499 B1**
(45) Veröffentlichungstag und Bekanntmachung des Hinweises auf die Patenterteilung: **15.06.1994**
(21) Anmeldenummer: 91907415.3
(22) Anmeldetag: 12.04.1991
(51) Int. Cl.: F16H 1/44, B60K 17/20

(54) **LENKACHSE MIT SELBSTSPERR-DIFFERENTIALGETRIEBE**
STEERING AXLE WITH SELF-LOCKING DIFFERENTIAL GEAR
ESSIEU DE DIRECTION A ENGRENAGE DIFFERENTIEL AUTOBLOQUANT

(30) Priorität: 14.04.1990 DE 4012108
(43) Veröffentlichungstag der Anmeldung: 25.11.1992
(73) Patentinhaber: ZF FRIEDRICHSHAFEN Aktiengesellschaft, 88038 Friedrichshafen (DE)
(72) Erfinder: HAUPT, Josef, D-7991 Oberteuringen (DE); BÜRKER, Rainer, D-7980 Ravensburg (DE)
(86) Internationale Anmeldenummer: EP9100703
(87) Internationale Veröffentlichungsnummer: WO9116557

(56) Entgegenhaltungen:
- DE-B- 1 045 815
- DE-B- 1 172 125
- FR-A- 469 737
- FR-A- 1 236 945
- GB-A- 524 109
- US-A- 2 997 897

## Beschreibung

Die Erfindung betrifft eine Lenkachse mit den Merkmalen:
- Ein Radträger ist an einem Achsgehäuse um eine Lenklagerachse begrenzt schwenkbar gelagert;
- eine Radantriebswelle ist axial fest in dem Radträger gelagert;
- ein Planetenträger eines Differentialgetriebes ist axial fest in dem Achsgehäuse gelagert;
- der Planetenträger treibt über Planetenräder zwei Zentralräder;
- eine Reibkupplung verbindet mindestens ein Zentralrad mit dem Planetenträger;
- Reibglieder der Reibkupplung sind axial zwischen einer nach außen weisenden Stirnfläche des Zentralrades und einer nach innen weisenden Stirnfläche des Planetenträgers angeordnet;
- je eine Abtriebswelle ist drehfest und axial beweglich mit jedem Zentralrad verbunden;
- jede Abtriebswelle treibt eine Radantriebswelle über eine Gelenkwelle;
- ein axial festes Gelenk der Gelenkwelle ist axial außerhalb der Lenklagerachse angeordnet derart, daß die Abtriebswelle mit wachsendem Lenkwinkel des Radträgers nach innen verschoben wird.

Mit einer Lenkachse dieser Art kann, wenn die Drehkraft der Reibkupplung groß genug gewählt ist, ein Fahrzeug auch auf glatter Fahrbahn und im Gelände noch eine große Zugkraft erzeugen, weil dann kein einzelnes Rad der Lenkachse durchrutscht. Die Kräfte in der Lenkeinrichtung bleiben aber nur bei Geradeausfahrt in erträglichen Grenzen, während sie mit wachsendem Lenkwinkel unzulässig groß werden.

Bei einer bekannten Lenkachse dieser Art (DE-A-39 32 789.2, Bild 1) ist die Drehkraft der Reibkupplung so gering gewählt, daß die Lenkkraft auch bei größtem Lenkwinkel erträglich bleibt. Um bei Geradeausfahrt im Gelände eine ausreichende Zugkraft zu erzeugen, wird willkürlich oder selbsttätig eine zusätzliche, außerhalb des Planetenträgers angeordnete Kupplung geschlossen, die die Abtriebswelle mit dem Planetenträger verbindet. Sowohl diese Kupplung selbst als auch die notwendige Betätigungseinrichtung dazu bedeuten einen großen zusätzlichen Bauaufwand.

Der Erfindung liegt die Aufgabe zugrunde, eine Lenkachse der eingangs beschriebenen Art zu schaffen, mit der ohne eine solche zusätzliche Kupplung die Zugkraft bei Geradeausfahrt im Gelände groß genug ist und mit der ohne großen Bauaufwand die Drehkraft der Reibkupplung mit wachsendem Lenkwinkel verringert wird derart, daß der Radschlupf und die Lenkkraft immer erträglich bleiben und die Lenkachse nicht zu stark nach außen schiebt.

Diese Aufgabe wird mit den Merkmalen nach Anspruch 1 gelöst:
Mit wachsendem Lenkwinkel wird die Abtriebswelle und damit das Widerlager der Feder nach innen verschoben derart, daß die Drehkraft der Reibkupplung kleiner wird.

Das Gelenk kann ein einfaches Kreuzgelenk oder ein aufwendiges Gleichlauf-Festgelenk sein. Der größte mögliche Beugewinkel des Gelenks begrenzt den Lenkwinkel. Bei großer Drehzahl und großem Lenkwinkel ist ein erträglicher Gleichlauf zwischen der Abtriebswelle des Differentialgetriebes und der Radantriebswelle und die erfindungsgemäße Verschiebung der Abtriebswelle nach innen nur mit einem Gleichlauf-Festgelenk mit entsprechend großem Beugewinkel erreichbar.

Wenn ein noch größerer Lenkwinkel gefordert ist, sind zwei Gelenke nötig (Anspruch 2). Dann genügen für einen guten Gleichlauf auch bei großer Drehzahl zwei einfache Kreuzgelenke.

Wenn die Drehkraft des Planetenträgers über die Axialkraft des Zentralrades die Drehkraft der Reibkupplung erzeugt und die mit dem Lenkwinkel wachsende Federkraft der Feder entgegen dieser Axialkraft die Reibkupplung öffnet (Anspruch 3), bleibt die Lenkraft auch bei größter Drehkraft immer in erträglichen Grenzen.

Die Planetenräder und die Zentralräder müssen nicht Kegelräder sein (Anspruch 4), sondern können auch Schrägstirnräder oder Schraubenräder sein. Auch dann kann die Drehkraft des Planetenträgers erfindungsgemäß eine Axialkraft des Zentralrades erzeugen, die die Reibkupplung schließt.

Wenn allein die Federkraft der Feder die Drehkraft der Reibkupplung erzeugt, und wenn diese Federkraft mit wachsendem Lenkwinkel kleiner wird, weil das Widerlager der Feder dann mit der Abtriebswelle entsprechend verschoben wird (Anspruch 5), bleibt auch hier die Lenkkraft immer erträglich.

Die Anordnung der Ringfeder oder mehrerer Ringfedern zwischen den Stirnflächen des Planetenträgers und der Abtriebswelle ist beliebig (Ansprüche 6 bis 9).

Die Zeichnung zeigt Ausführungsbeispiele nach der Erfindung.
- Fig. 1 + Fig. 1A: zeigen eine Lenkachse nach Anspruch 2;
- Fig. 2 - Fig. 4: zeigen Lenkachsen nach Anspruch 4;
- Fig. 5: zeigt eine Lenkachse nach Anspruch 5;
- Fig. 6: zeigt eine Lenkachse nach Anspruch 6 jeweils als Ausschnitt aus einem Längsschnitt;
- Fig. 7: zeigt eine Lenkachse von oben gesehen als Schemaskizze.

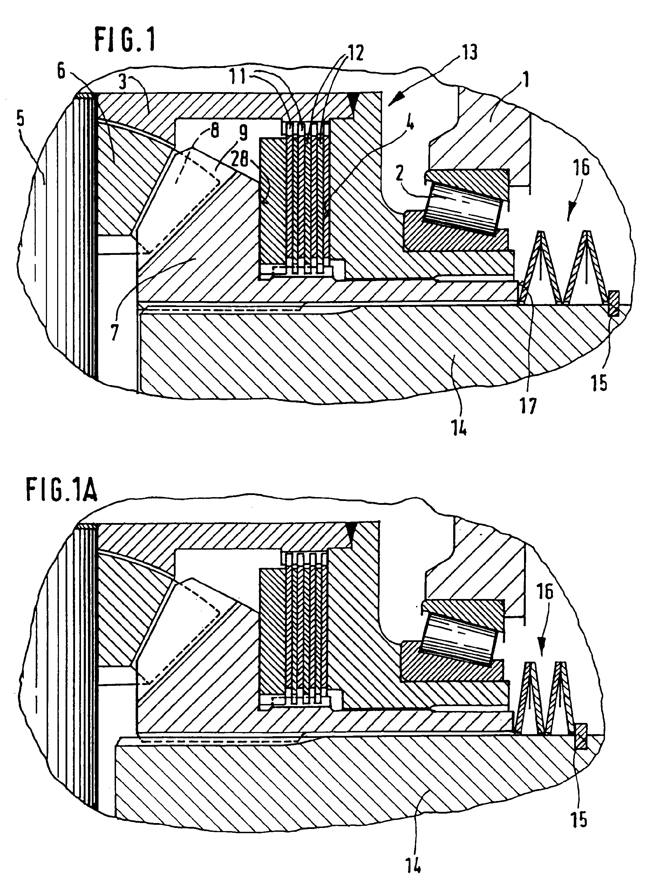

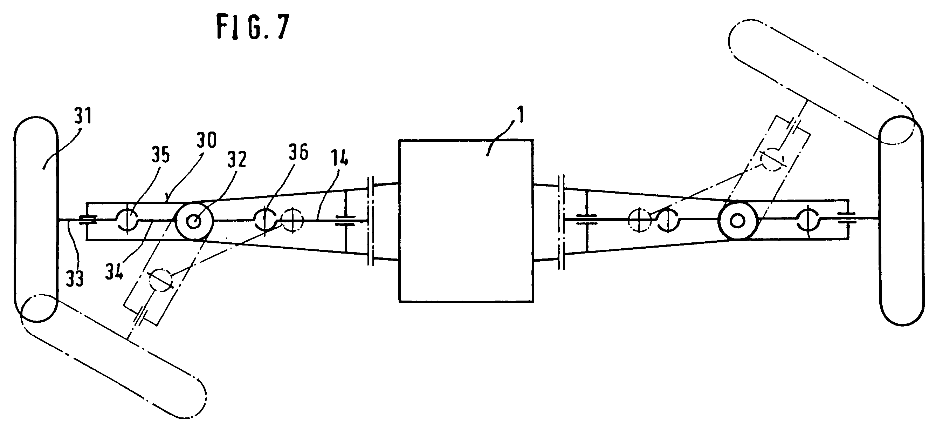

Fig. 1, 1A und 7: In einem Achsgehäuse 1 ist mit Planetenträgerlagern 2 ein Planetenträger 3 mit Planetenachsen 5 gelagert. Auf den Planetenachsen 5 sind Planetenräder 6 gelagert. Der Planetenträger 3 treibt über die Planetenräder 6 zwei Zentralräder 7. Die Planetenräder 6 und die Zentralräder 7 sind Kegelräder mit Laufzähnen 8, 9.

Erste und zweite Reibglieder 11, 12 von zwei Reibkupplungen 13 sind jeweils axial zwischen einer Stirnfläche 28 des Zentralrades 7 und einer Stirnfläche 4 des Planetenträgers 3 angeordnet. Die ersten Reibglieder 11 sind mit dem Planetenträger 3, die zweiten Reibglieder 12 jeweils mit dem Zentralrad 7 drehfest und axial beweglich verbunden. Die Reibkupplung 13 verbindet daher jeweils das Zentralrad 7 mit dem Planetenträger 3.

Eine Drehkraft zwischen dem Planetenträger 3 und einem Zentralrad 7 erzeugt über die Laufzähne 8, 9 eine nach außen gerichtete Axialkraft des Zentralrades 7. Diese Axialkraft des Zentralrades 7 wirkt auf die Reibglieder 11, 12 und schließt die Reibkupplung 13.

Links und rechts axial außen an dem Achsgehäuse 1 ist je ein Radträger 30 für ein gelenktes, angetriebenes Rad 31 um eine Lenklagerachse 32 begrenzt schwenkbar gelagert. In dem Radträger 30 ist eine Radantriebswelle 33 axial fest gelagert.

Mit jedem Zentralrad 7 ist eine Abtriebswelle 14 drehfest und axial beweglich verbunden. Jede Abtriebswelle 14 treibt eine Radantriebswelle 33 über eine Gelenkwelle 34 mit zwei axial festen Gelenken 35, 36 derart, daß die Abtriebswelle 14 mit wachsendem Lenkwinkel des Radträgers 30 nach innen verschoben wird. Diese Verschiebung erfolgt, weil ein Gelenk 35 axial außerhalb der Lenklagerachse 32 angeordnet ist.

Eine nach innen gerichtete Stirnfläche 15 an der Abtriebswelle 14 bildet ein Widerlager für eine Feder 16 mit axialer Federkraft. Die Feder 16 ist eine Ringfeder und besteht aus einem Paket von vier einfach geschichteten Tellerfedern. Die Feder 16 drückt gegen eine äußere Stirnfläche 17 des Zentralrades 7 und wirkt der Axialkraft des Zentralrades 7 entgegen derart, daß die Drehkraft der Reibkupplung 13 mit wachsendem Lenkwinkel kleiner wird.

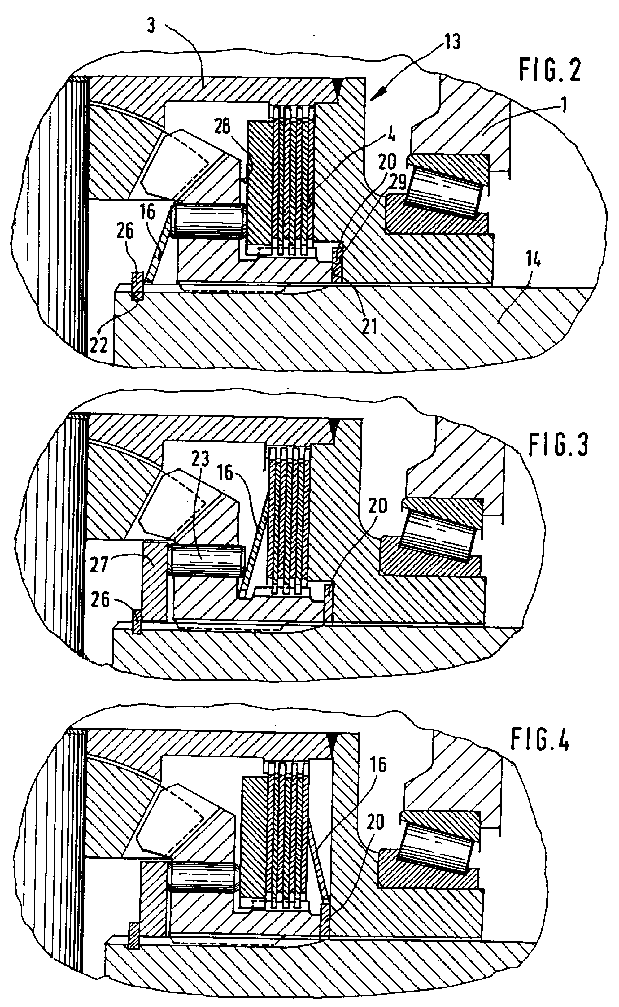

Fig. 2 bis Fig. 6: Die Axialkraft jedes Zentralrades 7 wirkt jeweils auf ein Axiallager 20 zwischen einer äußeren Stirnfläche 21 des Zentralrades 7 und einer Stirnfläche 29 des Planetenträgers 3. Eine nach außen gerichtete Stirnfläche 22 an dem inneren Ende der Abtriebswelle 14 bildet das Widerlager für die Feder 16. Die Feder 16 ist axial zwischen der Stirnfläche 22 der Abtriebswelle 14 und der Stirnfläche 4 des Planetenträgers 3 angeordnet und erzeugt mit ihrer axialen Federkraft die Drehkraft der Reibkupplung 13. Übertragglieder 23 in einem Kranz von axialen Bohrungen 21 in dem Zentralrad 7 übertragen die Federkraft durch das Zentralrad 7 hindurch.

Fig. 2: Die Feder 16 ist axial zwischen der Stirnfläche 22 der Abtriebswelle 14 und inneren Stirnflächen 25 der Übertragglieder 23 angeordnet. Die Übertragglieder 23 sind zylindrische Bolzen. Ein Sicherungsring 26 stützt die Feder 16 gegen die Stirnfläche 22 der Abtriebswelle 14.

Fig. 3: Die Feder 16 ist axial zwischen den Reibgliedern 11, 12 und äußeren Stirnflächen 27 der Übertragglieder 23 angeordnet. Axial zwischen dem Sicherungsring 26 und den Übertraggliedern 23 ist ein Ring 27 angeordnet.

Fig. 4: Die Feder 16 ist axial zwischen den Reibgliedern 11, 12 und der Stirnfläche 4 angeordnet.

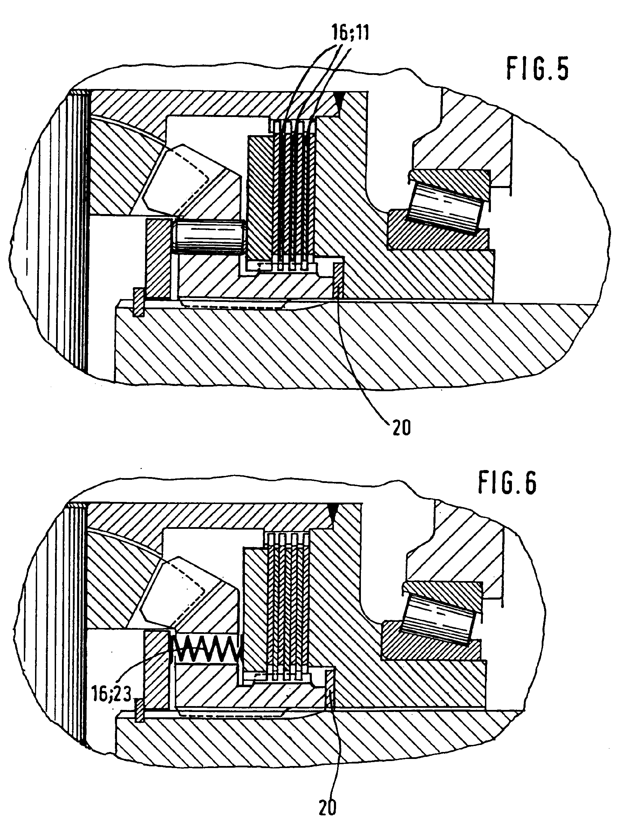

Fig. 5: Die ersten Reibglieder 11 sind als Wellringfedern gestaltet und bilden selbst die Feder 16.

Fig. 6: Die Übertragglieder 23 sind Schraubendruckfedern und bilden selbst die Feder 16.

### Bezugszeichen

- 1: Achsgehäuse
- 2: Planetenträgerlager
- 3: Planetenträger
- 4: Stirnfläche
- 5: Planetenachse
- 6: Planetenrad
- 7: Zentralrad
- 8: Laufzahn
- 9: Laufzahn
- 11: Reibglied
- 12: Reibglied
- 13: Reibkupplung
- 14: Abtriebswelle
- 15: Stirnfläche
- 16: Feder
- 17: Stirnfläche
- 20: Axiallager
- 21: Stirnfläche
- 22: Stirnfläche
- 23: Übertragglied
- 24: Bohrung
- 25: Stirnfläche
- 26: Sicherungsring
- 27: Ring
- 28: Stirnfläche
- 29: Stirnfläche
- 30: Radträger
- 31: Rad
- 32: Lenklagerachse
- 33: Radantriebswelle
- 34: Gelenkwelle
- 35: Gelenk
- 36: Gelenk

## Patentansprüche

1. Lenkachse mit den Merkmalen:
- ein Radträger (30) ist an einem Achsgehäuse (1) um eine Lenklagerachse (32) begrenzt schwenkbar gelagert;
- eine Radantriebswelle (33) ist axial fest in dem Radträger (30) gelagert;
- ein Planetenträger (3) eines Differentialgetriebes ist axial fest in dem Achsgehäuse (1) gelagert;
- der Planetenträger (3) treibt über Planetenräder (6) zwei Zentralräder (7);
- eine Reibkupplung (13) verbindet mindestens ein Zentralrad (7) mit dem Planetenträger (3);
- Reibglieder (11, 12) der Reibkupplung (13) sind axial zwischen einer nach außen weisenden Stirnfläche (28) des Zentralrades (7) und einer nach innen weisenden Stirnfläche (4) des Planetenträgers (3) angeordnet;
- je eine Abtriebswelle (14) ist drehfest und axial beweglich mit jedem Zentralrad (7) verbunden;
- jede Abtriebswelle (14) treibt eine Radantriebswelle (33) über eine Gelenkwelle (34);
- ein axial festes Gelenk (35) der Gelenkwelle (34) ist axial außerhalb der Lenklagerachse (32) angeordnet derart, daß die Abtriebswelle (14) mit wachsendem Lenkwinkel des Radträgers (30) nach innen verschoben wird,
**gekennzeichnet** durch die Merkmale:
- Die Abtriebswelle (14) bildet ein Widerlager für eine Feder (16) mit axialer Federkraft;
- die Federkraft ändert eine Schließkraft der Reibkupplung (13) derart, daß mit wachsendem Lenkwinkel eine Drehkraft der Reibkupplung (13) kleiner wird.

2. Lenkachse nach Anspruch 1 mit den Merkmalen:
- die Gelenkwelle (34) hat zwei axial feste Gelenke (35, 36);
- die zwei Gelenke (35, 36) sind rechts und links von der Lenklagerachse (32) angeordnet.

3. Lenkachse nach Anspruch 1 mit den Merkmalen:
- eine Drehkraft des Planetenträgers (3) erzeugt über Laufzähne (8, 9) der Planetenräder (6) und des Zentralrades (7) eine nach außen wirkende Axialkraft des Zentralrades (7);
- die Axialkraft erzeugt eine Drehkraft der Reibkupplung (13);
- die Federkraft wirkt entgegen der Axialkraft des Zentralrades (7) und mindert die Drehkraft der Reibkupplung (13).

4. Lenkachse nach Anspruch 3 mit den Merkmalen:
- die Planetenräder (6) und die Zentralräder (7) sind Kegelräder;
- die Feder (16) ist axial zwischen einer nach außen weisenden Stirnfläche (17) des Zentralrades (7) und einer nach innen weisenden Stirnfläche (15) der Abtriebswelle (14) angeordnet.

5. Lenkachse nach Anspruch 1 mit den Merkmalen:
- die Feder (16) und Übertragglieder (23) in einem Kranz von Bohrungen (24) durch das Zentralrad (7) sind in Reihe mit den Reibgliedern (11, 12) axial zwischen der Stirnfläche (4) des Planetenträgers (3) und einer nach außen weisenden Stirnfläche (22) an dem inneren Ende der Abtriebswelle (14) angeordnet;
- die Federkraft erzeugt eine Drehkraft der Reibkupplung (13).

6. Lenkachse nach Anspruch 5 mit den Merkmalen:
- die Übertragglieder (23) sind Bolzen;
- mindestens eine Ringfeder bildet die Feder (16).

7. Lenkachse nach Anspruch 5 mit den Merkmalen:
- die Übertragglieder (23) sind Bolzen;
- mindestens ein Reibglied (11) ist als Ringfeder gestaltet und bildet die Feder (16).

8. Lenkachse nach Anspruch 5 mit den Merkmalen:
- die Übertragglieder (23) sind Schraubendruckfedern;
- die Übertragglieder (23) bilden die Feder (16).

9. Lenkachse nach Anspruch 5 mit den Merkmalen:
- die Übertragglieder (23) sind Schraubendruckfedern;
- mindestens ein Reibglied (11) ist als Ringfeder gestaltet;
- die Übertragglieder (23) und das Reibglied (11) bilden gemeinsam die Feder (16).

## Claims

1. Steering axle having the features:
- a wheel carrier (30) is supported on an axle casing (1) so as to be capable of swivelling to limited extent about a steering bearing axle (32);
- a wheel drive shaft (33) is supported in an axially fixed manner in the wheel carrier (30);
- a planet carrier (3) of a differential gear is supported in an axially fixed manner in the axle casing (1);
- the planet carrier (3) via planet wheels (6) drives two central wheels (7);
- a friction clutch (13) connects at least one central wheel (7) to the planet carrier (3);
- friction elements (11, 12) of the friction clutch (13) are disposed axially between an outward-directed end face (28) of the central wheel (7) and an inward-directed end face (4) of the planet carrier (3);
- a respective output shaft (14) is connected in a non-rotatable and axially movable manner to each central wheel (7);
- each output shaft (14) drives a wheel drive shaft (33) via a cardan shaft (34);
- an axially fixed joint (35) of the cardan shaft (34) is disposed axially outside of the steering bearing axle (32) in such a way that the output shaft (14) is displaced inwards as the steering angle of the wheel carrier (30) increases,
characterized by the features:
- the output shaft (14) forms an abutment for a spring (16) with an axial spring force;
- the spring force alters a closing force of the friction clutch (13) in such a way that, as the steering angle increases, a torque force of the friction clutch (13) is reduced.

2. Steering axle according to claim 1, having the features:
- the cardan shaft (34) has two axially fixed joints (35, 36);
- the two joints (35, 36) are disposed to the right and left of the steering bearing axle (32).

3. Steering axle according to claim 1, having the features:
- a torque force of the planet carrier (3), via running teeth (8, 9) of the planet wheels (6) and of the central wheel (7), generates an outwardly acting axial force of the central wheel (7);
- the axial force generates a torque force of the friction clutch (13);
- the spring force acts counter to the axial force of the central wheel (7) and reduces the torque force of the friction clutch (13).

4. Steering axle according to claim 3, having the features:
- the planet wheels (6) and the central wheels (7) are bevel wheels;
- the spring (16) is disposed axially between an outward-directed end face (17) of the central wheel (7) and an inward-directed end face (15) of the output shaft (14).

5. Steering axle according to claim 1, having the features:
- the spring (16) and transmission elements (23) in a ring of bores (24) through the central wheel (7) are disposed in series with the friction elements (11, 12) axially between the end face (4) of the planet carrier (3) and an outward-directed end face (22) on the inner end of the output shaft (14);
- the spring force generates a torque force of the friction clutch (13).

6. Steering axle according to claim 5, having the features:
- the transmission elements (23) are pins;
- at least one annular spring forms the spring (16).

7. Steering axle according to claim 5, having the features:
- the transmission elements (23) are pins;
- at least one friction element (11) is fashioned as an annular spring and forms the spring (16).

8. Steering axle according to claim 5, having the features:
- the transmission elements (23) are helical pressure springs;
- the transmission elements (23) form the spring (16).

9. Steering axle according to claim 5, having the features:
- the transmission elements (23) are helical pressure springs;
- at least one friction element (11) is fashioned as an annular spring;
- the transmission elements (23) and the friction element (11) jointly form the spring (16).

## Revendications

1. Essieu directeur dans lequel :
- un support de roue (30) est monté sur un carter d'essieu (1) de manière à pouvoir pivoter dans une mesure limitée autour d'un pivot de direction (32);
- un arbre de roue (33) est monté de manière fixe axialement dans le support de roue (30);
- un porte-satellites (3) d'un différentiel est monté de manière fixe axialement dans le carter d'essieu (1);
- le porte-satellites (3) entraîne deux pignons planétaires (7) au moyen de deux satellites (6);
- un embrayage à friction (13) relie au moins un pignon planétaire (7) au porte-satellites (3);
- des éléments de friction (11, 12) de l'embrayage (13) sont placés axialement entre une surface frontale (28) du pignon planétaire (7), orientée vers l'extérieur, et une surface frontale (4) du porte-satellites (3), orientée vers l'intérieur;
- un arbre de sorti (14) est raccordé respectivement à chaque pignon planétaire (7) de manière rigide en rotation et mobile axialement;
- chaque arbre de sortie (14) entraîne un arbre de roue (33) au moyen d'un arbre à cardans (34);
- un joint articulé fixe axialement (35) de l'arbre à cardans (34) est placé axialement à l'extérieur par rapport au pivot de direction (32), de sorte que l'arbre de sortie (14) est déplacé vers l'intérieur quand l'angle de braquage du support de roue (30) augmente,
**caractérisé** en ce que
- l'arbre de sortie (14) sert d'appui à un ressort (16) exerçant une force axiale;
- la force du ressort modifie une force de fermeture de l'embrayage (13) de telle manière qu' un couple transmis par l'embrayage (13) diminue quand l'angle de braquage augmente.

2. Essieu selon la revendication 1, dans lequel:
- l'arbre à cardans (34) comporte deux joints articulés fixes axialement (35, 36);
- les deux joints articulés (35, 36) sont placés à droite et à gauche du pivot de direction (32).

3. Essieu selon la revendication 1, dans lequel :
- un couple faisant tourner le porte-satellites (3) produit, par l'entremise des dents (8, 9) des satellites (6) et du pignon planétaire (7), une force axiale agissant vers l'extérieur sur le pignon planétaire (7);
- la force axiale produit un couple dans l'embrayage (13);
- la force du ressort agit dans le sens opposé à la force axiale produite sur le pignon planétaire (7) et réduit le couple dans l'embrayage (13).

4. Essieu selon la revendication 3, dans lequel :
- les satellites (6) et les pignons planétaires (7) sont des pignons coniques;
- le ressort (16) est placé axialement entre une surface frontale (17) du pignon planétaire (7), orientée vers l'extérieur, et une surface frontale (15) de l'arbre de sortie (14), orientée vers l'intérieur.

5. Essieu selon la revendication 1, dans lequel :
- le ressort (16) et des éléments de transmission (23) disposés dans une couronne de trous (24) à travers le pignon planétaire (7) sont placés, en série avec les éléments de friction (11, 12), axialement entre la surface frontale (4) du porte-satellites (3) et une surface frontale (22) orientée vers l'extérieur et ménagée à l'extrémité intérieure de l'arbre de sortie (14);
- la force du ressort produit un couple dans l'embrayage (13).

6. Essieu selon la revendication 5, dans lequel :
- les éléments de transmission (23) sont des goujons;
- au moins un ressort annulaire constitue le ressort (16).

7. Essieu selon la revendication 5, dans lequel :
- les éléments de transmission (23) sont des goujons;
- au moins un élément de friction (11) est agencé en ressort annulaire et constitue le ressort (16).

8. Essieu selon la revendication 5, dans lequel :
- les éléments de transmission (23) sont des ressorts hélicoïdaux de compression;
- les éléments de transmission (23) constituent le ressort (16).

9. Essieu selon la revendication 5, dans lequel :
- les éléments de transmission (23) sont des ressorts hélicoïdaux de compression;
- au moins un élément de friction (11) est agencé en ressort annulaire;
- les éléments de transmission (23) et l'élément de friction (11) constituent ensemble le ressort (16).
